# EUROPÄISCHE PATENTSCHRIFT

(11) **EP 1 101 170 B1**
(45) Veröffentlichungstag und Bekanntmachung des Hinweises auf die Patenterteilung: **08.05.2002**
(21) Anmeldenummer: 99941524.3
(22) Anmeldetag: 05.08.1999
(51) Int. Cl.: G06F 13/40

(54) **INTERFACE-SCHALTUNG UND VERFAHREN ZUR ÜBERTRAGUNG VON DATEN ZWISCHEN EINER SERIELLEN SCHNITTSTELLE UND EINEM PROZESSOR**
INTERFACE CIRCUIT AND METHOD FOR TRANSFERRING DATA BETWEEN A SERIAL INTERFACE AND A PROCESSOR
CIRCUIT D'INTERFACE ET PROCEDE PERMETTANT D'ECHANGER DES DONNEES ENTRE UNE INTERFACE SERIE ET UN PROCESSEUR

(30) Priorität: 05.08.1998 EP 98114750
(43) Veröffentlichungstag der Anmeldung: 23.05.2001
(73) Patentinhaber: Infineon Technologies AG, 81541 München (DE)
(72) Erfinder: KLOSA, Klaus, D-80337 München (DE); HOFMANN, Harald, D-90766 Fürth (DE)
(74) Vertreter: Epping, Wilhelm, Dipl.-Ing.
(86) Internationale Anmeldenummer: EP9905679
(87) Internationale Veröffentlichungsnummer: WO0008566

(56) Entgegenhaltungen:
- EP-A- 0 290 172
- EP-A- 0 364 720
- EP-A- 0 562 746

## Beschreibung

Die vorliegende Erfindung betrifft eine Interface-Schaltung zur Übertragung von Daten über eine serielle Schnittstelle von und zu einem Prozessor und ein Verfahren zur Übertragung von Daten zwischen einer seriellen Schnittstelle und einem Prozessor.

Die vorliegende Erfindung soll zur seriellen, insbesondere drahtlosen Datenübertragung zu einem beispielsweise auf einer Chipkarte angeordneten Prozessor dienen. Besonders geeignet ist die vorliegende Erfindung für die drahtlose Datenübertragung zwischen einem Kartenleser und einer kontaktlosen Chipkarte mit Prozessor.

In diesen Anwendungsfällen soll der Prozessor entlastet werden, damit ein langsamer getakteter Prozessor verwendet werden kann. Dadurch soll der Stromverbrauch gesenkt werden (bei den heute üblichen Prozessoren ist der Stromverbrauch proportional zur Taktfrequenz). Außerdem soll der Prozessor möglichst oft und möglichst lange in den sogenannten Schlafoder Stand by-Modus geschaltet werden, in dem der Prozessor nicht arbeitet und dadurch wesentlich weniger Strom verbraucht.

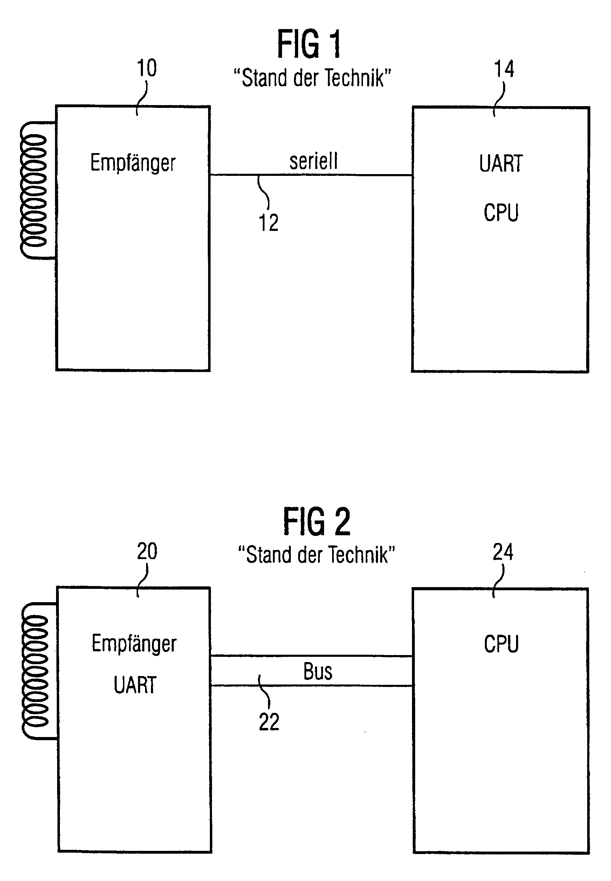

Gemäß dem gegenwärtigen Stand der Technik erfolgt die Übertragung von Daten zwischen einer seriellen Schnittstelle und einem Prozessor mittels einer parallel-seriell bzw. seriellparallel-Wandlung über einen sogenannten UART (Universal Asynchronus Receiver Transmitter) -universeller asynchroner Empfänger und Sender. Dieser wird üblicherweise durch ein Schieberegister auf der Seite realisiert, an der beispielsweise der Transceiver einer drahtlosen Übertragung angeschlossen ist. Dieses Schieberegister kann bitweise beschrieben (beim Empfangen) bzw. bitweise gelesen (beim Senden) werden. Der Prozessor muß auf der anderen Seite des UART die Daten parallel und zeitsynchron zu dem verwendeten Datenübertragungsprotokoll von dem UART abholen, bzw. diesem zur Verfügung stellen (sh. Figuren 1 und 2). Dies stellt recht hohe Anforderungen an die Echtzeitfähigkeit des Prozessors. Solche hohen Anforderungen an die Echtzeitfähigkeit des Prozessors stehen im Widerspruch zu der Forderung, daß der Prozessor möglichst wenig Strom verbrauchen soll und möglichst billig sein soll. Gerade bei kontaktlosen Chipkarten sollten Prozessoren verwendet werden können, die möglichst einfach und möglichst langsam getaktet sind, und deshalb sehr wenig Strom verbrauchen und sehr billig sind. Solche Prozessoren können aber die o.g. Echtzeitanforderungen nicht erfüllen.

Man verwendet daher gegenwärtig im Stand der Technik bei kontaktlosen Chipkarten ein Verfahren, bei dem die serielle Information bitweise vom Prozessor vom Anschluß der seriellen Schnittstelle geholt bzw. an den Anschluß der seriellen Schnittstelle geschrieben wird. Diese Aufgabe bindet jedoch sehr viel Rechenzeit des Prozessors, so daß wiederum die Notwendigkeit entsteht, einen schnelleren Prozessor einzusetzen.

EP 02 90 172 zeigt eine Interface-Schaltung zur Datenübertragung zwischen zwei Datenbussen, bei der die Datenbreite angepaßt werden kann. Allerdings ist nur eine Byte-weise Anpassung möglich.

Es ist daher Aufgabe der vorliegenden Erfindung, eine Interface-Schaltung zur Übertragung von Daten über eine serielle Schnittstelle von und zu einem Prozessor anzugeben, bei der die Datenübertragung ablaufen kann, ohne daß der Prozessor damit belastet wird. Weiter ist es Aufgabe der Erfindung, ein dafür geeignetes Verfahren zur Übertragung von Daten zwischen einer seriellen Schnittstelle und einem Prozessor anzugeben.

Erfindungsgemäß wird diese Aufgabe durch eine Interface-Schaltung gelöst, bei der ein Speicher für mehrere Bus- oder Prozessor-Wortlängen (z.B. Byte) zwischen serieller Schnittstelle und Prozessor angeordnet ist.

Die Aufgabe wird ebenfalls durch ein Verfahren gelöst, bei dem die Daten seriell bitweise empfangen und in einen Speicher eingelesen und vom Prozessor dort byteweise wieder ausgelesen werden, bzw. vom Prozessor byteweise in den Speicher geschrieben und von dort bitweise gesendet werden.

Es ist dabei besonders bevorzugt, wenn der Speicher Wortoder bitweise beschrieben und ausgelesen werden kann. Dazu ist es besonders bevorzugt, daß der Speicher einen Schreib und einen Lesepointer besitzt, die jedes Bit oder jedes Wort (z. B. Byte) einzeln adressieren können.

Zur weiteren Stromersparnis ist es vorteilhaft, wenn der Prozessor über einen Stromsparmodus (Sleep- oder Stand by-Mode) mit minimalem Stromverbrauch verfügt.

Es ist weiter vorteilhaft, in dem Speicher einen Vergleicher einzubauen. Dadurch kann der Prozessor weiter entlastet werden.

Vorzugsweise kann der Vergleicher dabei eine einfache Logik umfassen, die automatisch jedes empfangene Bit mit dem Inhalt der Speicherzelle im Speicher vergleicht, auf die das empfangene Bit geschrieben werden soll.

Zur weiteren Vereinfachung der Schaltung kann der Speicher in das CPU-Modul oder in das Empfänger-Modul integriert werden. Eine weitere Vereinfachung der Schaltung ist auch dadurch möglich, daß der Speicher durch RAM-Zellen aus dem normalen RAM im Adreßbereich des Prozessors realisiert wird.

Zur weiteren Entlastung des Prozessors kann zusätzlich zu dem Speicher ein Checksummenmodul vorgesehen werden. Zusätzlich zum Checksummenmodul kann auch noch ein Vergleicher vorgesehen sein, der die Checksumme der empfangenen Daten mit einer erwarteten, vorausberechneten Checksumme vergleicht. Auf diese Weise kann der Prozessor weiter entlastet werden.

Vorzugsweise kann der Speicher in Form einer Ringstruktur realisiert werden, und/oder mit einer Überlaufdetektionsvorrichtung versehen sein, die bei einem drohenden Überlauf des Speichers den Prozessor aktiviert (aufweckt). Dadurch können Datenverluste durch Überschreiben im Speicher vermieden werden.

Bei dem erfindungsgemäßen Verfahren kann zur Entlastung des Prozessors vorzugsweise vorgesehen sein, daß der Schreib- und Lesepointer des Speichers automatisch ohne Tätigwerden des Prozessors gesetzt werden kann.

Eine wesentlich größere Flexibilität der Programmierung bietet ein Verfahren, bei dem der Prozessor die Schreib- und Lesepointer des Speichers frei setzen kann.

Noch größere programmtechnische Flexibilität bietet das Verfahren, bei dem der Prozessor die einzelnen Speicherzellen des Speichers als Bestandteile des eigenen Adreßbereichs behandelt und diese somit wahlfrei lesen und beschreiben kann.

Eine weitere Entlastung des Prozessors kann dadurch erfolgen, daß ein automatischer Datenvergleich vorgesehen wird, wobei die zu erwartenden Daten an der entsprechenden Stelle im Speicher abgespeichert sein müssen, und mittels einer einfachen Logik jedes empfangene Bit mit dem Inhalt der Speicherzelle im Speicher verglichen wird, auf die es geschrieben wird.

Dabei kann vorzugsweise der Schreibpointer des Speichers sowohl die Adressierung des erwarteten Bits, mit dem verglichen werden soll, als auch die Adressierung des empfangenen Bits, das jetzt in den Speicher geschrieben werden soll, liefern. Auf diese Weise ergibt sich eine Vereinfachung der Programmierung und des Schaltungsaufbaus.

Hierbei kann vorzugsweise nach dem Vergleich aller Bits eines Bytes ein diesem Byte zugeordnetes Bit auf 0 gesetzt werden, wenn alle Bits gleich waren, während es sonst auf 1 gesetzt wird. Dabei ist es besonders bevorzugt, wenn auf die zugeordneten Bits von dem Prozessor byteweise zugegriffen werden kann. Durch Ausmaskieren von Vergleichsinformationen kann schnell und einfach eine neu empfangene Bitfolge bewertet werden.

Vorzugsweise kann auch dabei der Prozessor während der Datenübertragung in einen Stromsparmodus (Sleep- oder Stand by-Mode) geschaltet werden. Dabei ist es besonders bevorzugt, daß der Prozessor bei einem drohenden Überlauf des Speichers aktiviert (aufgeweckt) wird.

Anstelle des relativ aufwendigen Vergleichs der einzelnen Bits kann auch ein automatischer Datenvergleich vorgesehen werden, wobei automatisch eine Prüfsumme der empfangenen Daten mit einer im voraus berechneten Prüfsumme der zu erwartenden Daten verglichen wird.

Auf diese Weise kann der Prozessor weiter entlastet werden, indem Vergleiche, z.B. der Seriennummer der kontaktlosen Chipkarte, automatisiert und ohne Unterstützung durch den Prozessor während des Datenempfangs stattfinden können.

Mit der vorliegenden Erfindung können auch Protokolle verarbeitet werden, die die Übertragung von Bruchteilen eines Bytes zulassen (z.B. nur 3 Bit).

Sowohl die Anwendung von Mehrwort-Speichern im seriellen Interface von Chipkarten, als auch die Verwendung solcher automatischer Vergleichsschaltungen und -verfahren in Kombination mit einer CPU sind bisher nicht bekannt gewesen.

Im folgenden wird die Erfindung anhand der in der beiliegenden Zeichnung dargestellten Ausführungsformen näher erläutert. Es zeigen:
Fig. 1 den Stand der Technik mit serieller Übertragung zwischen Empfängermodul und Prozessormodul;
Fig. 2 den Stand der Technik mit Anschluß des Empfängermoduls an den CPU-Bus.
Fig. 3 eine erfindungsgemäße Lösung mit serieller Übertragung der Daten zwischen Empfängermodul und dem Prozessormodul;
Fig. 4 eine erfindungsgemäße Lösung mit Anschluß des Empfängermoduls an den Prozessorbus;
Fig. 5 einen erfindungsgemäßen FiFo-Speicher mit Vergleichsschaltung zur Überprüfung der Richtigkeit erwarteter Daten;
Fig. 6 eine Prinzipdarstellung des First-in-First-out-Speichers;
Fig. 7 einen erfindungsgemäßen Datenvergleich über Bildung einer Prüfsumme; und
Fig. 8 die Bildung der Prüfsumme parallel zum Laden der Daten in den First-in-First-out-Speicher.

Die Figuren 1 und 2 zeigen nochmals die Probleme des Standes der Technik auf. Entweder kann der Empfänger 10 über eine serielle Verbindung 12 mit dem Prozessormodul 14 verbunden sein, auf dem dann eine UART (Universal Asynchronuous Receiver Transmitter = universeller asynchroner Empfänger und Sender)-Schaltung vorgesehen ist. Eine andere Lösung im Stand der Technik sieht ein Empfängermodul 20 vor, welches selbst die UART-Schaltung trägt, und dann über den Datenbus 22 des Prozessors 24 an diesen angeschlossen ist.

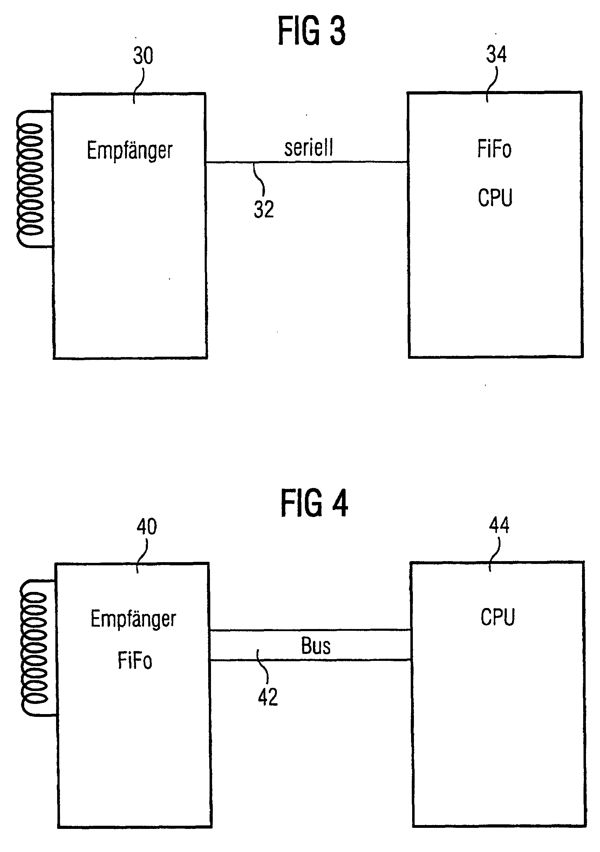

Die Figuren 3 und 4 zeigen demgegenüber die erfindungsgemäße Lösung. In Fig. 3 findet wieder ein Empfängermodul 30 mit serieller Schnittstelle Verwendung. Über die serielle Verbindung 32 steht das Empfängermodul 30 mit dem Prozessormodul 34 in Verbindung. Anstelle der UART-Schaltung ist jedoch auf dem Prozessormodul 34 ein First-in-First-out-Speicher vorgesehen. Statt der UART-Schaltung wird also eine First-in-First-out-Struktur mit beispielsweise 32 Byte verwendet. Dabei werden im Fall des Empfangens von Daten die Daten bitweise in den First-in-First-out-Speicher geschrieben. Sobald ein Byte gefüllt ist, wird automatisch das nächste Byte im First-in-First-out-Speicher bitweise gefüllt, bis der Datenblock zu Ende ist. Das Senden läuft analog zum Empfangen ab, d.h., die Daten werden aus dem First-in-First-out-Speicher bitweise, Byte nach Byte ausgelesen. Sowohl der Empfangs- als auch der Sendevorgang können unabhängig von dem Prozessor (CPU) ablaufen. Vorzugsweise kann sich der Prozessor dabei in einem Sleep- oder Stand by-Mode (einem Stromsparmodus mit vernachlässigbarem Stromverbrauch) befinden. Der Prozessor kann den Inhalt des First-in-First-out-Speichers byteweise sequentiell auslesen bzw. byteweise sequentiell Daten dort einschreiben. Mit Hilfe eines Schreib- und eines Lesepointers ist es möglich, jedes Bit in dem First-in-First-out-Speicher einzeln zu adressieren. Dadurch können auch unvollständige Bytes, beispielsweise nur 3 Bit, gesendet oder empfangen werden. Gleichzeitig sind die Anforderungen an die Echtzeitfähigkeit des Prozessors erheblich geringer als bei der Lösung gemäß dem Stand der Technik mit UART-Schaltung.

Alternativ zu einem First-in-First-out-Speicher kann auch ein Last-in-First-out-Speicher (LiFo) verwendet werden. Hierbei wird lediglich die Reihenfolge der empfangenen und gesendeten Daten umgekehrt. Dies kann bei der Programmierung berücksichtigt oder sogar erwünscht sein. Die folgenden Ausführungen lassen sich selbstverständlich analog für einen Last-in-First-out-Speicher anwenden.
Der First-in-First-out-Speicher ist also bei der vorliegenden Ausführungsform gem. Fig. 3 in das CPU-Modul integriert. Der First-in-First-out-Speicher kann dabei sogar mit RAM-Zellen aus dem normalen RAM-Arbeitsspeicher im Adreßbereich des Prozessors (beispielsweise im internen RAM) realisiert werden. Dadurch sind keine zusätzlichen Speicherschaltungen erforderlich.

Die Figur 4 zeigt eine weitere Ausführungsform der Erfindung. Dabei ist der First-in-First-out-Speicher in das Empfängermodul 40 integriert. Dieses ist sodann über den Prozessordatenbus 42 mit dem Prozessormodul 44 verbunden.

Sowohl bei der Ausführungsform der Erfindung nach Fig. 3 als auch bei der Ausführugsform nach Fig. 4 kann vorgesehen sein, daß der First-in-First-out-Speicher nur sequentiell von dem Prozessor (CPU) beschrieben und gelesen werden kann. Ein wahlfreier Zugriff des Prozessors auf den First-in-First-out-Speicher ist damit ausgeschlossen. Dies trägt erheblich zur Datensicherheit bei, wenn vermieden werden soll, daß eine Anwendung manipulierenderweise die Daten einer anderen Anwendung zu ändern versucht.

Eine wesentlich flexiblere Programmierung ist jedoch möglich, wenn der Prozessor den Schreib- und Lesepointer des First-in-First-out-Speichers frei setzen kann. Damit kann sowohl beeinflußt werden, an welcher Stelle (auf das Bit genau) der Prozessor parallel liest bzw. schreibt, als auch an welcher Stelle (auf das Bit genau) das Drahtlos-Interface seriell schreibt bzw. liest.

Eine weitere Erhöhung der Flexibilität des Zugriffs wird dadurch erlaubt, daß der Prozessor die einzelnen Bits des First-in-First-out-Speichers als Bestandteile seines logischen Adressenbereichs betrachtet und diese wahlfrei und unabhängig von den Schreib- bzw. Lesepointern beschreiben bzw. lesen kann. Diese Lösung eignet sich besonders in Verbindung mit der Realisierung des First-in-First-out-Speichers mittels physikalischer RAM-Zellen aus dem normalen Arbeitsspeicher des Prozessors.

Bei jeder der beschriebenen Ausführungsformen des First-in-First-out-Speichers kann zusätzlich eine Vergleichsschaltung im First-in-First-out-Speicher oder eine automatische Checksummenprüfung vorgesehen werden.

Zusätzlich zum First-in-First-out-Speicher kann auch noch eine UART-Schaltung gem. dem Stand der Technik vorgesehen werden, um beispielsweise lange Protokolle (bei einem 32-Byte-First-in-First-out-Speicher beispielsweise 40-Byte-Protokolle) konventionell bearbeiten zu können.

Besonders bevorzugt ist es, den First-in-First-out-Speicher in Form einer Ringstruktur zu organisieren. Dann kann bei einem drohenden Überlauf des First-in-First-out-Speichers der Prozessor aktiviert (aufgeweckt) werden, damit dieser Daten aus dem First-in-First-out-Speicher abarbeitet.

Im Bedarfsfall kann der First-in-First-out-Speicher auch wie eine "klassische" UART-Schaltung des Standes der Technik betrieben werden.

Der First-in-First-out-Speicher kann selbstverständlich auch mit Prozessoren ohne Stromsparmodus realisiert werden.

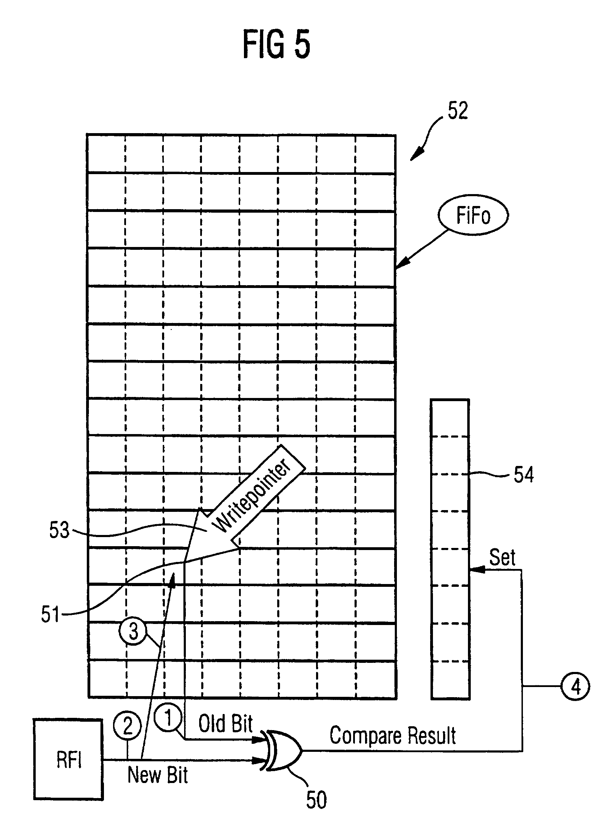

Zur zusätzlichen Entlastung des Prozessors kann ein automatischer Vergleicher in der Interface-Schaltung realisiert werden. Dadurch wird der Prozessor von der Aufgabe des Vergleichens von empfangenen Daten mit erwarteten Daten (beispielsweise zur Authentifizierung) entlastet werden. Erfindungsgemäß werden diese Aufgaben durch einen First-in-First-out-Speicher mit eingebautem Vergleicher erledigt, wie dies in Fig. 5 dargestellt ist. Dadurch können die Leistungsanforderungen an den Prozessor und damit der Stromverbrauch weiter gesenkt werden. Ebenfalls ist es eventuell möglich, einen preisgünstigeren Prozessor zu verwenden.

Die in Fig. 5 dargestellte Vergleichsschaltung benötigt die erwarteten Daten, beispielsweise eine Seriennummer oder ein Passwort, im First-in-First-out-Speicher. Eine einfache Logik 50 vergleicht automatisch jedes empfangene Bit (New Bit, 2) mit dem Inhalt der Speicherzelle 51 im First-in-First-out-Speicher 52 auf die es geschrieben werden soll. Somit dient der Schreibpointer 53 sowohl der Adressierung des erwarteten Bits (1), mit dem verglichen werden soll, als auch der Adressierung der Schreibstelle des empfangenen Bits (2), das jetzt in den First-in-First-out-Speicher geschrieben werden soll (→3). Die neuen Bits werden dabei von der Sende-Empfangseinheit RFI (Radio Frequency Interface) geliefert.

Nachdem alle Bits eines Bytes verglichen und in den First-in-First-out-Speicher 52 geschrieben worden sind, wird, wenn alle Bits gleich waren, ein diesem Byte zugeordnetes Bit in einem speziellen Vergleichsregister 54 auf 0 gesetzt, sonst wird dieses Bit auf 1 gesetzt. Die Funktion ist dabei folgende, daß das Register 54 vor Beginn der Vergleichsoperation auf 0 gesetzt wird, und die Logik 50, sobald einmal der Zustand altes Bit ‡ neues Bit eintritt, die entsprechende Speicherzelle des Registers 54 auf 1 setzt. Anschließend wird mit dem folgenden Byte bitweise fortgefahren, bis der Datenblock verarbeitet ist. Auf den Inhalt des Registers 54, also die Vergleichsinformation, kann byteweise vom Prozessor zugegriffen werden. Durch Ausmaskieren von Vergleichsinformationen kann schnell und einfach eine neu empfangene Bitfolge bewertet werden.

Diese Vergleichsschaltung kann übrigens auch in Verbindung mit einer UART-Schaltung gem. dem Stand der Technik verwendet werden. Auf diese Weise kann auch ein automatischer Vergleicher ohne First-in-First-out-Speicher realisiert werden.

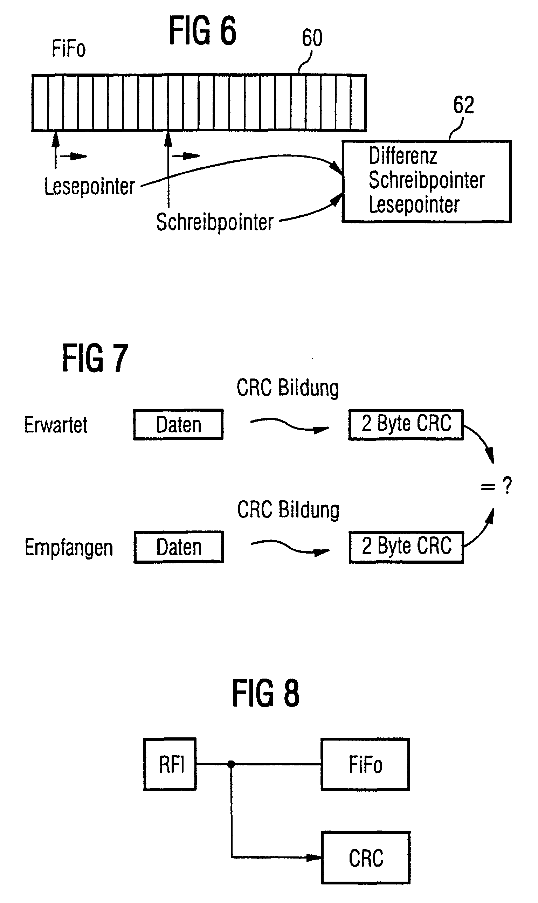

Die prinzipielle Funktion eines First-in-First-out-Speichers ist in der Figur 6 dargestellt. Der First-in-First-out-Speicher besteht aus einer Reihe von Speicherzellen, die zyklisch durch einen Lese- und einen Schreibpointer adressiert werden. Beim Schreiben in den First-in-First-out-Speicher wird der zu schreibende Wert an die Stelle geschrieben, an die der Schreibpointer zeigt und der Schreibpointer wird um eine Stelle inkrementiert. Beim Lesen wird geprüft, daß der Schreibpointer ungleich dem Lesepointer ist. Sodann wird der Wert der Speicherzelle ausgelesen, auf die der Lesepointer gezeigt hat, der Lesepointer wird inkrementiert. Wenn Schreibpointer gleich Lesepointer ist, ist der First-in-First-out-Speicher leer. Dies wird durch eine entsprechende Differenzschaltung 62 festgestellt. Dann wird entweder der Wert 0 oder die Mitteilung zurückgegeben, daß ein Lesen nicht möglich ist. Da die Differenzschaltung 62 also stets die Anzahl der Bits im First-in-First-out-Speicher angibt, kann diese Schaltung auch verwendet werden, um vor einem Überlauf des First-in-First-out-Speichers den Prozessor zu aktivieren und die Abarbeitung von Daten zu veranlassen, damit wieder Platz im First-in-First-out-Speicher geschaffen wird.

Eine weitere erfindungsgemäße Möglichkeit für den Datenvergleich besteht in der automatischen Erstellung einer Prüfsumme (Checksummer) der empfangenen Daten, beispielsweise nach dem CRC-Verfahren, die mit einer im voraus (beispielsweise während der Initialisierung) berechneten Prüfsumme der zu erwartenden Daten verglichen wird. Dieses Verfahren ist jedoch nicht so effizient, wie der in Fig. 5 beschriebene Vergleicher im First-in-First-out-Speicher, da die Checksummen der empfangenen Daten und der erwarteten Daten vom Prozessor verglichen werden müssen. Dies belastet also wiederum den Prozessor. Außerdem darf höchstens ein Bitfehler pro Datenblock vorhanden sein, damit dieser sicher erkannt wird. Darüber hinaus muß eine Logik zwischen Daten und Befehlen unterscheiden, da sonst die Prüfsumme der empfangenen Daten unter Umständen über andere Befehle gebildet wird, als die Prüfsumme der erwarteten Daten. Dies ist im einzelnen in den Figuren 7 und 8 dargestellt:

Aus den erwarteten Daten wird die CRC-Prüfsumme berechnet. Diese besteht aus zwei Bytes. Es werden sodann aus den empfangenen Daten ebenfalls nach dem CRC-Verfahren die Prüfsummen gebildet. Es müssen dann lediglich 2 Byte-lange CRC-Prüfsummen verglichen werden, und nicht die ganzen Daten. Der Vergleich dieser kurzen CRC-Prüfsummen aus zwei Byte ist wesentlich schneller als der Vergleich der gesamten Daten. Die Prüfsumme der zu erwartenden Daten kann bereits lange im voraus errechnet werden. Wie in Fig. 8 dargestellt besteht auch die Möglichkeit, die empfangenen Daten gleichzeitig in den First-in-First-out-Speicher und in eine Checksummenlogik einzugeben. Diese erzeugt in Echtzeit die Checksummen, so daß der Prozessor in Echtzeit nur noch den wenig Rechenzeit bedürftigen Checksummenvergleich durchführen muß.

Auf diese Weise kann durch Hinzufügen eines First-in-First-out-Speichers, sowie ggf. eines Vegleichers oder eines Prüfsummengenerators, der automatisch eine Prüfsumme über die empfangenen Daten bildet, der Prozessor erheblich entlastet werden, im Vergleich zu dem üblichen UART-Konzept. Dadurch kann die Frequenz und damit der Stromverbrauch des Prozessors niedriger sein. Niedrigerer Stromverbrauch bedeutet bei einer kontaktlosen Chipkarte insbesondere größere Reichweite.

Besonders bevorzugt ist es dabei, einen Prozessor zu verwenden der während des Sendens, Empfangens, oder solange er nicht beschäftigt ist, in einen Stromsparmodus versetzt werden kann. Der Prozessor kann dann beispielsweise, wenn er mit der Vorbereitung für das Senden/Empfangen fertig ist, in den Stromsparmodus geschaltet werden, bis das Senden/Empfangen beendet ist. Die sonst vom Prozessor benötigte Energie kann dann entweder gespart werden oder sie steht der Sende- bzw. Empfangshardware zur Verfügung. Außerdem können während des Sende- bzw. Empfangsbetriebs keine Versorgungsspikes von dem Prozessor auf das drahtlos übertragene Signal durchschlagen. Geringerer Stromverbrauch und günstigere Energieverteilung auf dem Kartenchip sowie ein günstigeres Signalverhalten ergeben eine größere Reichweite.

Darüber hinaus kann die Sendefunktion auch zeitgesteuert ausgelöst werden, während sich der Prozessor im Stromsparmodus befindet. Ebenso kann eine "Autoreceive-Funktion", d.h. eine automatische Empfangsfunktion realisiert werden. Dabei kann während des Stromsparmodus des Prozessors nach dem Senden automatisch in den Empfangsbetrieb umgeschaltet werden, ohne den Prozessor aktivieren zu müssen.

## Patentansprüche

1. Interface-Schaltung zur Übertragung von Daten über eine serielle Schnittstelle von und zu einem Prozessor (CPU),
**dadurch gekennzeichnet,**
**daß** lediglich ein Speicher für mehrere Bus- oder Prozessor-Wortlängen zwischen serieller Schnittstelle und Prozessor (CPU) angeordnet ist, wobei der Speicher (52) wortoder bitweise beschrieben und ausgelesen werden kann.

2. Schaltung nach Anspruch 1, **dadurch gekennzeichnet, daß** der Speicher (52) einen Schreib- und einen Lesepointer besitzt, die jedes Bit oder jedes Wort, z.B. Byte einzeln adressieren können.

3. Schaltung nach Anspruch 1, oder 2, **dadurch gekennzeichnet, daß** der Prozessor (CPU) über einen Stromsparmodus, auch Sleepmode genannt mit minimalem Stromverbrauch verfügt.

4. Schaltung nach Anspruch 1, 2, oder 3, **dadurch gekennzeichnet, daß** in dem Speicher (52) ein Vergleicher eingebaut ist.

5. Schaltung nach Anspruch 4, **dadurch gekennzeichnet, daß** der Vergleicher eine einfache Logik (50) umfaßt, die automatisch jedes empfangene Bit (2) mit dem Inhalt der Speicherzelle (1) im Speicher (52) vergleicht, auf die das empfangene Bit (2) geschrieben werden soll.

6. Schaltung nach einem der Ansprüche 1 bis 5, **dadurch gekennzeichnet, daß** der Speicher (52) in das CPU-Modul (34) integriert ist.

7. Schaltung nach einem der Ansprüche 1 bis 5, **dadurch gekennzeichnet, daß** der Speicher (52) in das Empfängermodul (40) integriert ist.

8. Schaltung nach einem der Ansprüche 1 bis 5, **dadurch gekennzeichnet, daß** der Speicher (52) durch RAM-Zellen aus dem normalen RAM im Adressbereich des Prozessors (CPU) realisiert ist.

9. Schaltung nach einem der Ansprüche 1 bis 8, **dadurch gekennzeichnet, daß** zusätzlich zum Speicher (52) ein Checksummenmodul vorgesehen ist.

10. Schaltung nach Anspruch 9, **dadurch gekennzeichnet, daß** zusätzlich zum Checksummenmodul ein Vergleicher vorgesehen ist, der die Checksumme der empfangenen Daten mit einer erwarteten vorausberechneten Checksumme vergleicht.

11. Schaltung nach einem der Ansprüche 1 bis 10, **dadurch gekennzeichnet, daß** der Speicher (52) in Form einer Ringstruktur realisiert ist.

12. Schaltung nach einem der Ansprüche 1 bis 11, **da-durch gekennzeichnet, daß** der Speicher (52) mit einer Überlaufdetektionsvorrichtung versehen ist, die bei einem drohenden Überlauf des Speichers (52) den Prozessor (CPU) aktiviert oder aufweckt.

13. Verfahren zur Übertragung von Daten zwischen einer seriellen Schnittstelle und einem Prozessor, **dadurch gekennzeichnet, daß** die Daten seriell bitweise empfangen und in einen Speicher (52) eingelesen und vom Prozessor (CPU) dort byteweise wieder ausgelesen werden, bzw. vom Prozessor (CPU) byteweise in den Speicher (52) geschrieben und von dort bitweise gesendet werden.

14. Verfahren nach Anspruch 13, **dadurch gekennzeichnet, daß** der Speicher (52) vom Prozessor (CPU) nur sequentiell gelesen und beschrieben werden kann, indem Schreib- und Lesepointer des Speichers automatisch ohne Belastung des Prozessors (CPU) gesetzt werden.

15. Verfahren nach Anspruch 13, **dadurch gekennzeichnet, daß** der Prozessor (CPU) Schreib- und Lesepointer des Speichers (52) frei setzen kann.

16. Verfahren nach Anspruch 13 oder 15, **dadurch gekennzeichnet, daß** der Prozessor (CPU) die einzelnen Speicherzellen des Speichers (52) als Bestandteile des eigenen Adreßbereichs behandelt und diese somit wahlfrei lesen und beschreiben kann.

17. Verfahren nach einem der Ansprüche 13 bis 16, **dadurch gekennzeichnet, daß** ein automatischer Datenvergleich vorgesehen wird, wobei die zu erwartenden Daten an der entsprechenden Stelle im Speicher (52) abgespeichert sein müssen, und mittels einer einfachen Logik (50) jedes empfangene Bit (2) mit dem Inhalt der Speicherzelle (51) im Speicher (52) verglichen wird, auf die es geschrieben wird.

18. Verfahren nach Anspruch 17, **dadurch gekennzeichnet, daß** der Schreibpointer (53) des Speichers (52) sowohl die Adressierung des erwarteten Bits, mit dem verglichen werden soll, als auch die Adressierung des empfangenen Bits (2), das jetzt in den Speicher geschrieben werden soll, liefert.

19. Verfahren nach Anspruch 17 oder 18, **dadurch gekennzeichnet, daß** nach dem Vergleich aller Bits eines Byte ein diesem Byte zugeordnetes Bit (4) auf 0 gesetzt wird, wenn alle Bits gleich waren, während es sonst auf 1 gesetzt wird.

20. Verfahren nach Anspruch 19, **dadurch gekennzeichnet, daß** auf die zugeordneten Bits von dem Prozessor (CPU) byteweise zugegriffen werden kann.

21. Verfahren nach einem der Ansprüche 13 bis 20, **dadurch gekennzeichnet, daß** der Prozessor (CPU) während der Datenübertragung in einen Stromsparmodus, auch Sleepmode genannt geschaltet wird.

22. Verfahren nach Anspruch 21, **dadurch gekennzeichnet, daß** der Prozessor (CPU) bei einem drohenden Überlauf des Speichers (52) aktiviert oder aufgeweckt wird.

23. Verfahren nach einem der Ansprüche 13 bis 16 **dadurch gekennzeichnet, daß** ein automatischer Datenvergleich vorgesehen ist, wobei automatisch eine Prüfsumme der empfangenen Daten mit einer im voraus berechneten Prüfsumme der zu erwartenden Daten verglichen wird.

24. Verfahren nach einem der Ansprüche 21 bis 23, **dadurch gekennzeichnet, daß** das Senden von Daten aus dem Speicher (52) zeitgesteuert eingeleitet werden kann, ohne daß der Prozessor (CPU) dabei aktiviert oder aufgeweckt werden muß.

25. Verfahren nach einem der Ansprüche 21 bis 24, **dadurch gekennzeichnet, daß** nach dem Senden von Daten automatisch in den Empfangsbetrieb umgeschaltet werden kann, ohne daß der Prozessor (CPU) dabei aktiviert oder aufgeweckt werden muß.

## Claims

1. Interface circuit for transmitting data via a serial interface to and from a processor (CPU), **characterized in that** only one memory for a number of bus or processor word lengths is arranged between the serial interface and the processor (CPU), in which arrangement the memory (52) can be written to and read from word by word or bit by bit.

2. Circuit according to Claim 1, **characterized in that** the memory (52) has a write pointer and a read pointer which can individually address each bit or each word e.g. byte.

3. Circuit according to Claim 1, or 2, **characterized in that** the processor (CPU) has a current saving mode also known as sleep mode with minimum current consumption.

4. Circuit according to Claim 1, 2, or 3, **characterized in that** a comparator is built into the memory (52).

5. Circuit according to Claim 4, **characterized in that** the comparator comprises a simple logic unit (50) which automatically compares each received bit (2) with the content of the memory cell (1) in the memory (52) to which the received bit (2) is to be written.

6. Circuit according to one of Claims 1 to 5, **characterized in that** the memory (52) is integrated in the CPU module (34).

7. Circuit according to one of Claims 1 to 5, **characterized in that** the memory (52) is integrated in the receiver module (40).

8. Circuit according to one of Claims 1 to 5, **characterized in that** the memory (52) is implemented by RAM cells from the normal RAM in the address area of the processor (CPU).

9. Circuit according to one of Claims 1 to 8, **characterized in that** a checksum module is provided in addition to the memory (52).

10. Circuit according to Claim 9, **characterized in that** a comparator which compares the checksum of the received data with an expected precalculated checksum is provided in addition to the checksum module.

11. Circuit according to one of Claims 1 to 10, **characterized in that** the memory (52) is implemented in the form of a ring structure.

12. Circuit according to one of Claims 1 to 11, **characterized in that** the memory (52) is provided with an overflow detection device which activates or wakes up the processor (CPU) in the event of an impending overflow of the memory (FiFo).

13. Method for transmitting data between a serial interface and a processor, **characterized in that** the data are received serially bit by bit and are read into a memory (52) and there are read out again byte by byte by the processor (CPU) or, respectively, are written into the memory byte by byte by the processor (CPU) and are transmitted byte by byte from the memory (52).

14. Method according to Claim 13, **characterized in that** the memory (52) can only be read and written to sequentially by the processor (CPU) **in that** write pointers and read pointers of the memory (52) are automatically set without load on the processor (CPU).

15. Method according to Claim 13, **characterized in that** the processor (CPU) can freely set the write pointer and read pointer of the memory (52).

16. Method according to Claim 13 or 15, **characterized in that** the processor (CPU) treats the individual memory cells of the memory (52) as components of its own address area and can thus read and write to them randomly.

17. Method according to one of Claims 13 to 16, **characterized in that** an automatic data comparison is provided in which the data must be stored at the corresponding position in the memory (52) and, by means of a simple logic unit (50), each received bit (2) is compared with the content of the memory cell (51) in the memory (52) to which it is written.

18. Method according to Claim 17, **characterized in that** the write pointer (53) of the memory (52) supplies both the addressing of the expected bit with which the comparison is to be made, and the addressing of the received bit (2) which is now to be written into the memory.

19. Method according to Claim 17 or 18, **characterized in that**, after all bits of a byte have been compared, a bit (4) associated with this byte is set to 0 if all bits were equal and is set to 1 if not.

20. Method according to Claim 19, **characterized in that** the associated bits can be be accessed byte by byte by the processor (CPU).

21. Method according to one of Claims 13 to 20, **characterized in that** the processor (CPU) is switched to a current saving mode also known as sleep mode during the data transmission.

22. Method according to Claim 21, **characterized in that** the processor (CPU) is activated or woken up in the event of an impending overflow of the memory (52).

23. Method according to one of Claims 13 to 16, **characterized in that** an automatic data comparison is provided in which a checksum of the received data is automatically compared with a precalculated checksum of the data to be expected.

24. Method according to one of claims 21 to 23, **characterized in that** the transmitting of data from the memory (FiFo) can be initiated under timing control without having to activate or wake up the processor (CPU).

25. Method according to one of claims 21 to 24, **characterized in that**, after the transmission of data, it is possible to automatically switch into receiving mode without having to activate (wake up) the processor (CPU).

## Revendications

1. Circuit d'interface permettant d'échanger des données provenant d'un processeur (CPU) et y allant par l'intermédiaire d'une interface série, **caractérisé en ce que** seulement une mémoire pour plusieurs longueurs de mots de bus ou de processeur est disposée entre une interface série et un processeur (CPU), l'écriture sur la mémoire (52) ou l'extraction de la mémoire pouvant avoir lieu mot par mot ou bit par bit.

2. Circuit selon la revendication 1, **caractérisé en ce que** la mémoire (52) possède un pointeur en écriture et un pointeur en lecture, qui peuvent adresser un par un chaque bit ou chaque mot, par exemple un octet.

3. Circuit selon la revendication 1 ou 2, **caractérisé en ce que** le processeur (CPU) dispose d'un mode d'économie de courant, encore appelé mode sleep, ayant une consommation minimale en courant.

4. Circuit selon les revendications 1, 2 ou 3, **caractérisé en ce qu'**un comparateur est inséré dans la mémoire (52).

5. Circuit selon la revendication 4, **caractérisé en ce que** le comparateur comprend une logique (50) simple, qui compare automatiquement chaque bit (2) reçu au contenu de la cellule (1) de mémoire de la mémoire (52), cellule sur laquelle le bit (2) reçu doit être écrit.

6. Circuit selon l'une des revendications 1 à 5, **caractérisé en ce que** la mémoire (52) est intégrée dans le module (34) CPU.

7. Circuit selon l'une des revendications 1 à 5, **caractérisé en ce que** la mémoire (52) est intégrée dans le module (40) de réception.

8. Circuit selon l'une des revendications 1 à 5, **caractérisé en ce que** la mémoire (52) est réalisée par des cellules RAM provenant de la RAM normale dans la zone d'adressage du processeur (CPU).

9. Circuit selon l'une des revendications 1 à 8, **caractérisé en ce qu'**un module de somme de contrôle est prévu en plus de la mémoire (52).

10. Circuit selon la revendication 9, **caractérisé en ce qu'**en plus du module de somme de contrôle un comparateur est prévu, qui compare la somme de contrôle des données reçues à une somme de contrôle attendue calculée au préalable.

11. Circuit selon l'une des revendications 1 à 10, **caractérisé en ce que** la mémoire (52) est réalisée sous la forme d'une structure en anneau.

12. Circuit selon l'une des revendications 1 à 11, **caractérisé en ce que** la mémoire (52) est pourvue d'un dispositif de détection de dépassement de capacité, qui active ou réveille le processeur (CPU) en cas de dépassement de capacité menaçant de la mémoire (52).

13. Procédé permettant d'échanger des données entre une interface série et un processeur, **caractérisé en ce que** les données sont reçues en série bit par bit et mémorisées dans une mémoire (52) et de là sont à nouveau extraites par le processeur (CPU) octet par octet, respectivement sont écrites par le processeur (CPU) octet par octet dans la mémoire (52) et de là sont émises bit par bit.

14. Procédé selon la revendication 13, **caractérisé en ce que** le processeur (CPU) ne peut lire la mémoire (52) et écrire sur la mémoire (52) que de façon séquentielle, en plaçant le pointeur en écriture et le pointeur en lecture de la mémoire (52) automatiquement sans charger le processeur (CPU).

15. Procédé selon la revendication 13, **caractérisé en ce que** le processeur (CPU) peut librement placer le pointeur en écriture et le pointeur en lecture de la mémoire (52).

16. Procédé selon la revendication 13 ou 15, **caractérisé en ce que** le processeur (CPU) traite toutes les cellules de mémoire de la mémoire (52) comme faisant partie intégrante de la propre zone d'adressage et peut donc facultativement les lire et écrire dessus.

17. Procédé selon l'une des revendications 13 à 16, **caractérisé en ce qu'**une comparaison automatique des données est prévue, les données auxquelles on peut s'attendre devant être mémorisées à l'endroit approprié dans la mémoire (52), et **en ce que** chaque bit (2) reçu est comparé au contenu de la cellule (51) de mémoire dans la mémoire (52), cellule sur laquelle l'écriture aura lieu, au moyen d'une logique (50) simple.

18. Procédé selon la revendication 17, **caractérisé en ce que** le pointeur (53) en écriture de la mémoire (52) livre aussi bien l'adressage du bit attendu, avec lequel la comparaison doit avoir lieu, que l'adressage du bit (2) reçu, qui doit maintenant être écrit dans la mémoire.

19. Procédé selon la revendication 17 ou 18, **caractérisé en ce qu'**après la comparaison de tous les bits d'un octet, un bit (4) attribué à cet octet est mis à 0, si tous les bits étaient égaux, alors qu'il est mis à 1 sinon.

20. Procédé selon la revendication 19, **caractérisé en ce que** le processeur (CPU) peut accéder octet par octet aux bits attribués.

21. Procédé selon l'une des revendications 13 à 20, **caractérisé en ce que** le processeur (CPU) est monté pendant l'échange de données dans un mode d'économie de courant, encore appelé mode sleep.

22. Procédé selon la revendication 21, **caractérisé en ce que** le processeur (CPU) est activé ou réveillé en cas de dépassement de capacité menaçant de la mémoire (52).

23. Procédé selon l'une des revendications 13 à 16, **caractérisé en ce qu'**une comparaison automatique des données est prévue, une somme de contrôle des données reçues étant automatiquement comparée à une somme de contrôle calculée au préalable des données auxquelles on peut s'attendre.

24. Procédé selon l'une des revendications 21 à 23, **caractérisé en ce que** l'émission de données provenant de la mémoire (52) peut être introduite par une commande temporelle, sans pour autant que le processeur (CPU) ne doive être activé ou réveillé.

25. Procédé selon l'une des revendications 21 à 24, **caractérisé en ce qu'**après l'émission de données on puisse automatiquement commuter dans le mode de réception, sans pour autant que le processeur (CPU) ne doive être activé ou réveillé.
